# EUROPEAN PATENT APPLICATION

(11) **EP 4 060 637 A1**
(43) Date of publication of application: **21.09.2022**
(21) Application number: 22161088.4
(22) Date of filing: 09.03.2022
(51) Int. Cl.: G08B 25/01, G08B 29/18

(54) **VEHICLE COMMUNICATION APPARATUS**

(30) Priority: 15.03.2021 JP 2021040896
(71) Applicant: Yazaki Corporation, Minato-ku Tokyo 108-8333 (JP)
(72) Inventor: Suzuki, Shingo, Shizuoka, 410-1194 (JP); Nishizaki, Ryohei, Shizuoka, 410-1194 (JP)
(74) Representative: Grünecker Patent- und Rechtsanwälte PartG mbB

(57) **Abstract**

A vehicle communication apparatus (1) includes a first communication device (51) that makes an emergency call from a vehicle (100) to the outside of the vehicle at the time of an emergency, a second communication device (6) that makes communication differing from the emergency call, an internal power source (2), and a power source controller (4) that can be connected to the internal power source and an external power source (101) mounted on the vehicle and controls power supply to the first communication device and the second communication device. The power source controller (4) supplies electric power of the internal power source (2) to the first communication device (51) and prohibits power supply to the second communication device (6) from the internal power source (2) when power supply from the external power source (101) cannot be received.

## Description

### BACKGROUND OF THE INVENTION

### 1. Field of the Invention

The present invention relates to a vehicle communication apparatus.

### 2. Description of the Related Art

Conventionally, there is a technique of making an emergency call. Japanese Patent Application Laid-open No. 2015-159370 discloses an emergency call system including a call trigger detection unit configured to detect, as a call trigger, vehicle accident detection or a call instruction by a vehicle user other than the vehicle accident detection, an emergency call processing unit configured to perform emergency call processing based on detection of the call trigger by the call trigger detection unit, and an external communication unit configured to make an emergency call to the outside of the vehicle under control by the emergency call processing unit.

Here, it is preferable that a communication device configured to make an emergency call and a communication device configured to make communication differing from the emergency call can be integrated to achieve miniaturization of an apparatus. On the other hand, a power source for the emergency call can be desirably ensured in the integrated apparatus. For example, priority can be desirably given to power supply to the communication device configured to make the emergency call.

### SUMMARY OF THE INVENTION

An object of the present invention is to provide a vehicle communication apparatus capable of achieving both of miniaturization of the apparatus and ensuring of electric power that is supplied to a communication device configured to make an emergency call.

In order to achieve the above mentioned object, a vehicle communication apparatus according to one aspect of the present invention includes a first communication device that makes an emergency call from a vehicle to outside of the vehicle at the time of an emergency; a second communication device that makes communication differing from the emergency call; an internal power source; and a power source controller that is connectable to the internal power source and an external power source mounted on the vehicle and configured to control power supply to the first communication device and the second communication device, wherein the power source controller supplies electric power of the internal power source to the first communication device and prohibits power supply to the second communication device from the internal power source when power supply from the external power source is not receivable.

According to another aspect of the present invention, in the vehicle communication apparatus, it is preferable to further include a position calculation device that receives satellite radio waves and calculates a position of the vehicle, wherein the power source controller supplies electric power of the internal power source to the position calculation device when power supply from the external power source is not receivable.

According to still another aspect of the present invention, in the vehicle communication apparatus, it is preferable that the power source controller includes a power source block having a controllable switch and a microcomputer controlling the switch, and when power supply from the external power source is not receivable, the power source block supplies electric power of the internal power source to the microcomputer, and the microcomputer brings the switch between the internal power source and the second communication device into a cut-off state.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram of a vehicle communication apparatus according to an embodiment;
FIG. 2 is a configuration diagram of a power source controller according to the embodiment;
FIG. 3 is a diagram illustrating the vehicle communication apparatus when an ACC is in an OFF state in a normal state;
FIG. 4 is a diagram illustrating the vehicle communication apparatus when the ACC is in an ON state in the normal state; and
FIG. 5 is a diagram illustrating the vehicle communication apparatus when power supply from an external power source cannot be received.

### DETAILED DESCRIPTION OF THE PREFERRED EMBODIMENTS

Hereinafter, a vehicle communication apparatus according to an embodiment of the present invention will be described in detail with reference to the drawings. The embodiment does not limit the present invention. Components in the following embodiment include those that can be easily assumed by those skilled in the art and substantially the same components.

### Embodiment

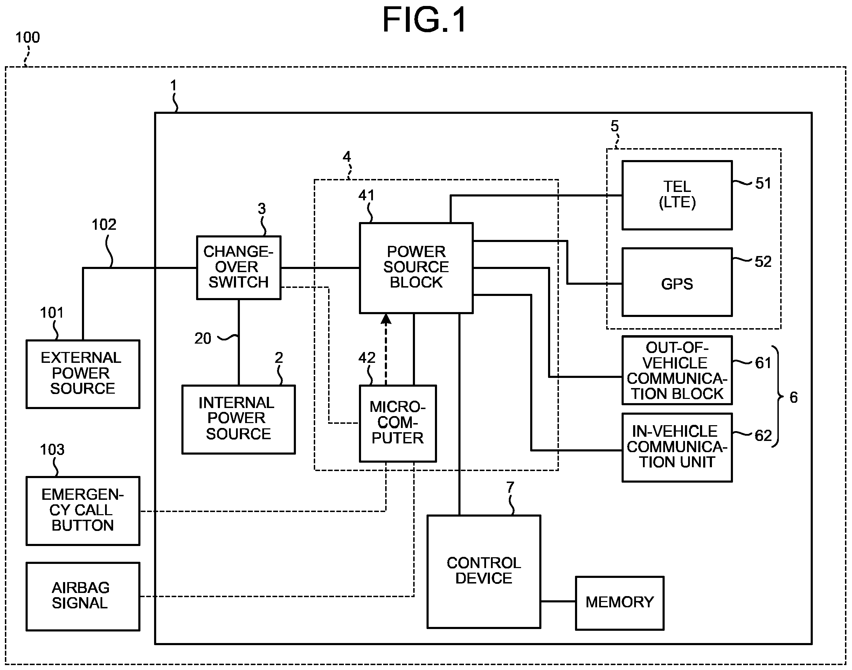

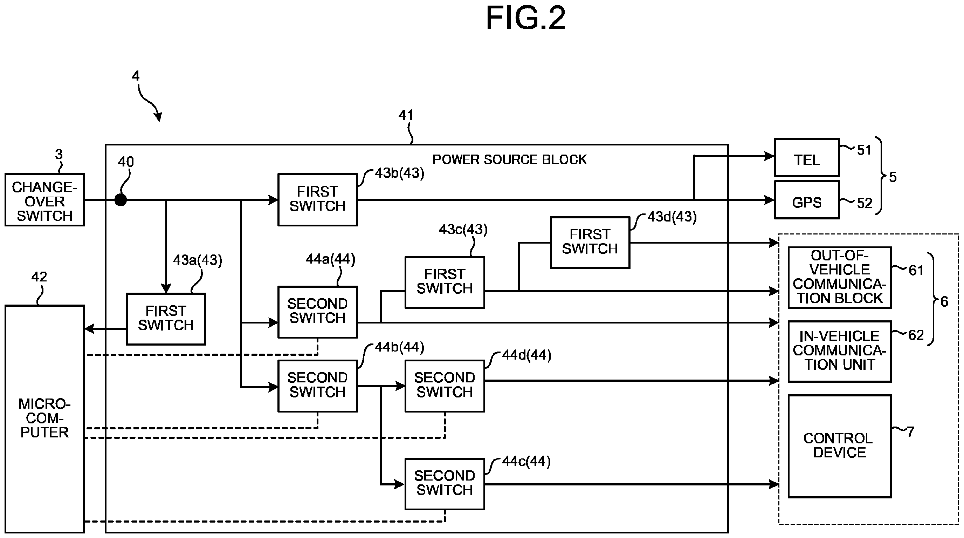

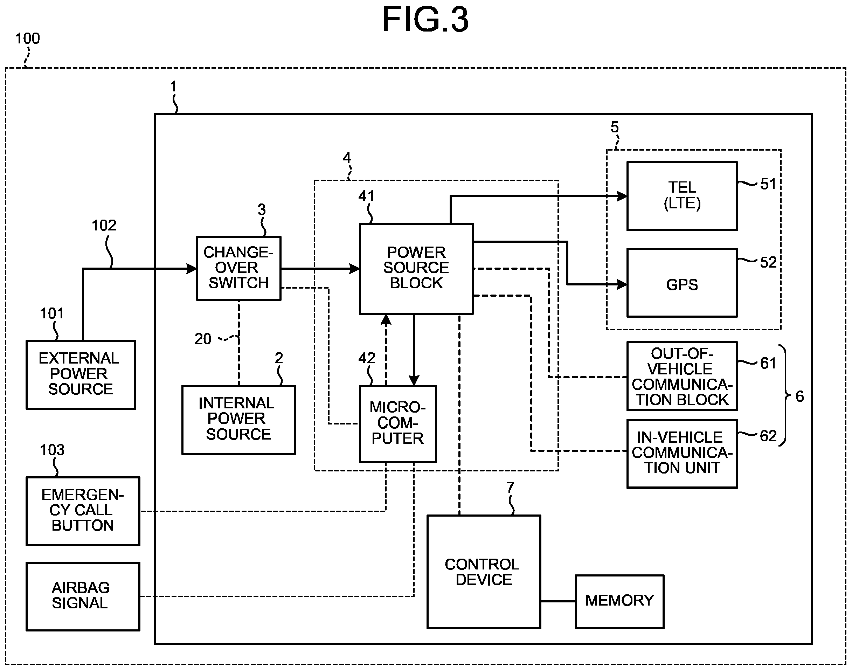

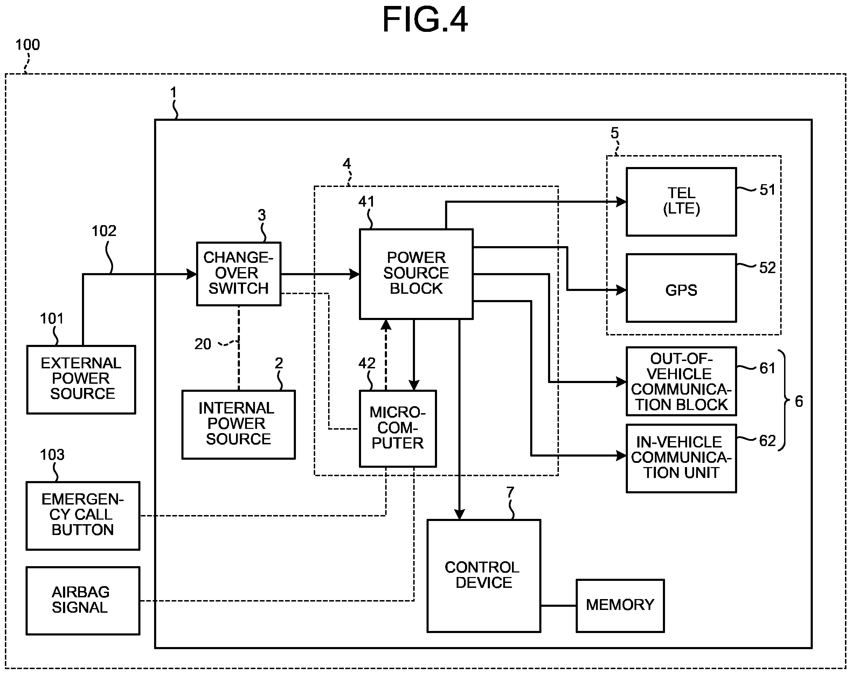

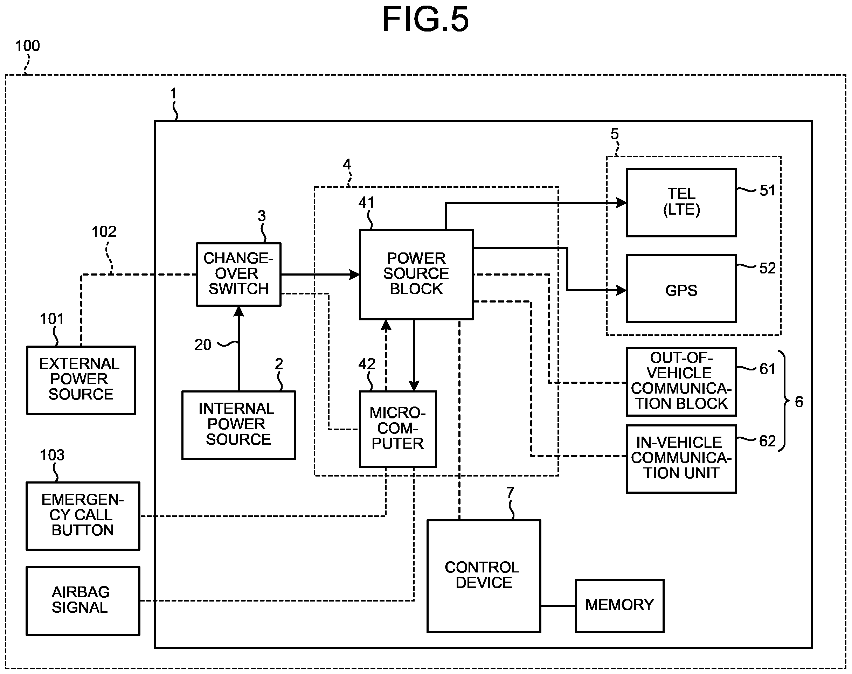

An embodiment will be described with reference to FIG. 1 to FIG. 5. The present embodiment relates to a vehicle communication apparatus. FIG. 1 is a block diagram of the vehicle communication apparatus according to the embodiment, FIG. 2 is a configuration diagram of a power source controller according to the embodiment, FIG. 3 is a diagram illustrating the vehicle communication apparatus when an ACC is in an OFF state in a normal state, FIG. 4 is a diagram illustrating the vehicle communication apparatus when the ACC is in an ON state in the normal state, and FIG. 5 is a diagram illustrating the vehicle communication apparatus when power supply from an external power source cannot be received.

As illustrated in FIG. 1, a vehicle communication apparatus 1 in the present embodiment is mounted on a vehicle 100. The vehicle 100 is, for example, an automobile. The type of the vehicle 100 is not particularly limited and may be a passenger automobile, an omnibus such as a bus, or a cargo automobile such as a truck. The vehicle 100 may be a hybrid vehicle or a plug-in hybrid vehicle.

The exemplified vehicle communication apparatus 1 is configured as an on-vehicle router. The vehicle communication apparatus 1 relays communication among a plurality of networks. The vehicle communication apparatus 1 may be a gateway. The vehicle communication apparatus 1 includes an internal power source 2, a changeover switch 3, a power source controller 4, an emergency communication unit 5, a second communication device 6, and a control device 7.

The vehicle communication apparatus 1 is connected to an external power source 101. The external power source 101 is a power source arranged outside the vehicle communication apparatus 1. The external power source 101 is a chargeable and dischargeable secondary battery and is, for example, a lead battery or a lithium ion battery. The external power source 101 may be a power source for an auxiliary machine or may be a power source for a running motor of the vehicle 100. The external power source 101 is charged with electric power generated by an alternator of the vehicle 100 or electric power generated by regeneration. The external power source 101 may be capable of being charged with electric power supplied from the outside of the vehicle 100.

The internal power source 2 is a backup power source arranged in the vehicle communication apparatus 1. The internal power source 2 is accommodated in, for example, a housing included in the vehicle communication apparatus 1. The internal power source 2 is a chargeable and dischargeable secondary battery and is, for example, a lead battery or a lithium ion battery.

The changeover switch 3 is connected to the external power source 101 through a first power source line 102. The changeover switch 3 is connected to the internal power source 2 through a second power source line 20. The changeover switch 3 connects power source of either the external power source 101 or the internal power source 2 to a power source block 41. The changeover switch 3 may be capable of connecting the external power source 101 and the internal power source 2. The changeover switch 3 connects the external power source 101 to the power source block 41 when power supply from the external power source 101 can be received. On the other hand, the changeover switch 3 connects the internal power source 2 to the power source block 41 when power supply from the external power source 101 cannot be received.

The changeover switch 3 is configured to be automatically switched in accordance with a voltage of the first power source line 102, for example. In this case, when the voltage of the first power source line 102 is higher than a predetermined threshold, the changeover switch 3 connects the external power source 101 to the power source block 41. On the other hand, when the voltage of the first power source line 102 is lowered to be equal to or lower than a predetermined lower limit value, the changeover switch 3 connects, to the power source block 41, the internal power source 2 instead of the external power source 101.

The power source controller 4 includes the power source block 41 and a microcomputer 42. The power source block 41 includes a switch circuit configured to control power supply to each of loads of the vehicle communication apparatus 1. As illustrated in FIG. 2, the power source block 41 includes an input portion 40, a plurality of first switches 43, and a plurality of second switches 44. The input portion 40 is connected to the changeover switch 3. That is to say, the input portion 40 is selectively connected to the external power source 101 or the internal power source 2. The first switches 43 and the second switches 44 are, for example, power source ICs.

The first switches 43 are automatically switched into either of conduction states or cut-off states. That is to say, the first switches 43 are autonomously switched to be turned ON/OFF. The first switches 43 are brought into the conduction states when a voltage on the power source side is higher than the predetermined threshold. On the other hand, the first switches 43 are brought into the cut-off states when the voltage on the power source side is lower than the predetermined lower limit value. The first switches 43 may include protection circuits against overcurrent or the like.

The second switches 44 are switched into either of conduction states or cut-off states in accordance with control signals. The second switches 44 are connected to the microcomputer 42 and are controlled by the control signals output from the microcomputer 42.

The exemplified power source block 41 includes four switches 43a, 43b, 43c, and 43d as the first switches 43. The switch 43a is interposed between the input portion 40 and the microcomputer 42. Accordingly, the microcomputer 42 can receive power supply all the time from either of the external power source 101 or the internal power source 2. The switch 43b is interposed between the input portion 40 and the emergency communication unit 5. Accordingly, the emergency communication unit 5 can receive power supply all the time from either of the external power source 101 or the internal power source 2.

The exemplified power source block 41 includes four switches 44a, 44b, 44c, and 44d as the second switches 44. The second communication device 6 and the control device 7 are connected to the input portion 40 through either of the switch 44a or 44b. The power source block 41 can therefore cut off the second communication device 6 and the control device 7 from the external power source 101 and the internal power source 2.

The microcomputer 42 is a microcomputer including a control circuit. The microcomputer 42 is programmed to control the second switches 44. The microcomputer 42 has a function of CAN communication and makes communication with devices of the vehicle 100 via a controller area network (CAN). The microcomputer 42 is connected to the changeover switch 3 and monitors the changeover switch 3. The microcomputer 42 acquires a state of the changeover switch 3 based on output from the changeover switch 3, for example. The microcomputer 42 acquires, for example, an ignition signal (IG signal), an ACC signal, an airbag signal, and the like by the CAN communication. The airbag signal is a signal that is output when an airbag is deployed. The microcomputer 42 is connected to an external emergency call button 103. When the emergency call button 103 is pressed, the microcomputer 42 detects a press signal.

The emergency communication unit 5 includes a first communication device 51 and a position calculation device 52. The first communication device 51 is a device to make an emergency call from the vehicle 100 to the outside of the vehicle in an emergency. The first communication device 51 is configured to make wireless communication and makes wireless communication with a wireless base station of a communication provider, for example. The first communication device 51 makes mobile communication of long term evolution (LTE)/4th generation (4G), for example.

The position calculation device 52 is a device to receive satellite radio waves and calculate a position of the vehicle 100. The radio waves that are received are, for example, transmitted from global positioning system (GPS) satellites. The first communication device 51 acquires positional information of the vehicle 100 from the position calculation device 52. The first communication device 51 may periodically transmit the acquired positional information to a cloud server or the like.

The first communication device 51 is configured to make an emergency call. The emergency call is executed when a collision is detected in the vehicle 100 or by an operation of a passenger of the vehicle 100. The emergency call is executed by, for example, an instruction by the microcomputer 42. When the microcomputer 42 detects a collision detection signal output from a sensor or an electronic control unit mounted on the vehicle 100, it instructs the first communication device 51 to execute the emergency call. The first communication device 51 connects to an emergency call center (call center) to enable conversations between the passenger and an operator. The first communication device 51 can transmit a present position of the vehicle 100 in the emergency call.

The second communication device 6 includes an out-of-vehicle communication block 61 and an in-vehicle communication unit 62. The out-of-vehicle communication block 61 includes a wireless communication circuit for making communication with the outside of the vehicle for connected services. The out-of-vehicle communication block 61 is configured to be capable of making Wi-Fi communication, for example. The in-vehicle communication unit 62 has an interface such as Ethernet (registered trademark) for making communication with an engine control unit (ECU) mounted on the vehicle 100.

The control device 7 includes a control circuit configured to collectively control the vehicle communication apparatus 1. The control device 7 is, for example, a system-on-a-chip (SoC). The control device 7 controls, for example, wireless communication by the out-of-vehicle communication block 61 and communication by the in-vehicle communication unit 62. The control device 7 may be configured to execute a function of monitoring the internal power source 2 and charging control on the internal power source 2. The microcomputer 42 may execute monitoring and charging control on the internal power source 2.

FIG. 3 illustrates the vehicle communication apparatus 1 when the ACC is in the OFF state in the normal state. The normal state indicates that power supply from the external power source 101 can be regularly received, for example. The changeover switch 3 connects the external power source 101 to the power source block 41 in the normal state. When the ACC of the vehicle 100 is in the OFF state, the power source block 41 connects the microcomputer 42 and the emergency communication unit 5 to the power source. The first switches 43 of the power source block 41 automatically connect the microcomputer 42 and the emergency communication unit 5 to the external power source 101. The microcomputer 42 cuts off the second communication device 6 and the control device 7 from the power source when the ACC is in the OFF state. The microcomputer 42 outputs signals for bringing the switches 44a and 44b into the cut-off states, for example.

FIG. 4 illustrates the vehicle communication apparatus 1 when the ACC is in the ON state in the normal state. The microcomputer 42 connects the second communication device 6 and the control device 7 to the power source when the ACC of the vehicle 100 is turned into the ON state. The microcomputer 42 outputs signals for bringing all the second switches 44 into the connected states, for example. That is to say, the power source controller 4 supplies electric power supplied from the external power source 101 to the microcomputer 42, the emergency communication unit 5, the second communication device 6, and the control device 7.

FIG. 5 illustrates the vehicle communication apparatus 1 when power supply from the external power source 101 cannot be received. When abnormality such as a defect is generated in the external power source 101 or the first power source line 102 is disconnected, the changeover switch 3 connects the internal power source 2 to the power source block 41. The first switches 43 of the power source block 41 automatically connect the internal power source 2 to the microcomputer 42 and the emergency communication unit 5. That is to say, the microcomputer 42 and the emergency communication unit 5 operate with electric power of the internal power source 2.

When the microcomputer 42 detects that the internal power source 2 is connected to the power source block 41 by the changeover switch 3, it prohibits power supply to the second communication device 6 and the control device 7. In this case, the microcomputer 42 outputs the signals for bringing the switches 44a and 44b into the cut-off states, for example. As illustrated in FIG. 5, the second communication device 6 and the control device 7 are thereby cut off from the internal power source 2. That is to say, in the vehicle communication apparatus 1, functions other than functions necessary for the emergency call are turned OFF and priority is given to ensuring of electric power for the emergency call.

When the microcomputer 42 detects a predetermined signal, it causes the first communication device 51 to execute the emergency call. The predetermined signal is the collision detection signal, the airbag signal, the press signal of the emergency call button 103, and the like. The first communication device 51 executes the emergency call with electric power from the internal power source 2. In this case, since no power is supplied to the second communication device 6 and the control device 7, power consumption in the vehicle communication apparatus 1 is reduced. In other words, electric power is preferentially supplied to the emergency communication unit 5 at the time of the emergency call. Accordingly, sufficient electric power can be supplied to the emergency communication unit 5 even with the internal power source 2 having a small capacity. The internal power source 2 having the small capacity enables a long emergency conversation and emergency communication time. That is to say, both of ensuring of electric power for the emergency call and reduction in the capacity of the internal power source 2 can be achieved. The reduction in the capacity of the internal power source 2 enables cost reduction and miniaturization and weight reduction of the vehicle communication apparatus 1.

As described above, the vehicle communication apparatus 1 according to the present embodiment includes the first communication device 51, the second communication device 6, the internal power source 2, and the power source controller 4. The first communication device 51 makes the emergency call from the vehicle 100 to the outside of the vehicle at the time of the emergency. The second communication device 6 makes communication differing from the emergency call. The power source controller 4 can be connected to the internal power source 2 and the external power source 101, and controls power supply to the first communication device 51 and the second communication device 6.

The power source controller 4 supplies electric power of the internal power source 2 to the first communication device 51 and prohibits power supply to the second communication device 6 from the internal power source 2 when power supply from the external power source 101 cannot be received. The vehicle communication apparatus 1 according to the present embodiment can achieve both of miniaturization of the integrated communication apparatus including the device for the emergency call and ensuring of electric power that is supplied to the first communication device 51 configured to make the emergency call.

The vehicle communication apparatus 1 according to the present embodiment includes the position calculation device 52. The position calculation device 52 receives the satellite radio waves and calculates the position of the vehicle 100. The power source controller 4 supplies electric power of the internal power source 2 to the position calculation device 52 when power supply from the external power source 101 cannot be received. The positional information of the vehicle 100 can therefore be utilized when the emergency call is executed.

The power source controller 4 of the present embodiment includes the power source block 41 and the microcomputer 42. The power source block 41 includes the controllable second switches 44. The microcomputer 42 controls the second switches 44. When power supply from the external power source 101 cannot be received, the power source block 41 supplies electric power of the internal power source 2 to the microcomputer 42 and the microcomputer 42 brings the second switches 44 between the internal power source 2 and the second communication device 6 into the cut-off states. Therefore, the power consumption of the vehicle communication apparatus 1 can be appropriately reduced by the microcomputer 42 and the second switches 44.

The first communication device 51 may execute emergency data communication instead of the conversations or in addition to the conversations at the time of the emergency call. For example, the first communication device 51 may transmit, to the emergency call center, data indicating the present position of the vehicle 100 and detection of the collision detection signal at the time of the emergency call.

### Modification of Embodiment

The configuration of the vehicle communication apparatus 1 is not limited to the configuration exemplified in the above-mentioned embodiment. For example, the vehicle communication apparatus 1 may include a communication device for wireless communication in the vehicle. The second switches 44 may be arranged between the power source and the emergency communication unit 5. In this case, the second switches 44 arranged between the power source and the emergency communication unit 5 are controlled by the microcomputer 42.

Contents disclosed in the above-mentioned embodiment and modification can be appropriately combined for execution.

The vehicle communication apparatus according to the present embodiment supplies electric power of the internal power source to the first communication device and prohibits power supply to the second communication device from the internal power source when power supply from the external power source cannot be received. The vehicle communication apparatus according to the present embodiment provides an effect of achieving both of miniaturization of the apparatus and ensuring of electric power that is supplied to the communication device configured to make the emergency call.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A vehicle communication apparatus (1) comprising:
a first communication device (51) that makes an emergency call from a vehicle (100) to outside of the vehicle (100) at the time of an emergency;
a second communication device (6) that makes communication differing from the emergency call;
an internal power source (2); and
a power source controller (4) that is connectable to the internal power source (2) and an external power source (101) mounted on the vehicle (100) and configured to control power supply to the first communication device (51) and the second communication device (6), wherein
the power source controller (4) supplies electric power of the internal power source (2) to the first communication device (51) and prohibits power supply to the second communication device (6) from the internal power source (2) when power supply from the external power source (101) is not receivable.

2. The vehicle communication apparatus (1) according to claim 1, further comprising:
a position calculation device (52) that receives satellite radio waves and calculates a position of the vehicle (100), wherein
the power source controller (4) supplies electric power of the internal power source (2) to the position calculation device (52) when power supply from the external power source (101) is not receivable.

3. The vehicle communication apparatus (1) according to claim 1 or 2, wherein
the power source controller (4) includes a power source block (41) having a controllable switch (44) and a microcomputer (42) controlling the switch (44), and
when power supply from the external power source (101) is not receivable, the power source block (41) supplies electric power of the internal power source (2) to the microcomputer (42), and the microcomputer (42) brings the switch (44) between the internal power source (2) and the second communication device (6) into a cut-off state.
